# EUROPÄISCHE PATENTSCHRIFT

(11) **EP 2 706 276 B1**
(45) Veröffentlichungstag und Bekanntmachung des Hinweises auf die Patenterteilung: **02.08.2017**
(21) Anmeldenummer: 13075059.9
(22) Anmeldetag: 02.09.2013
(51) Int. Cl.: F16L 13/14, F16L 9/04

(54) **INNENWANDIG VERSTÄRKTES ROHR UND VERFAHREN ZU DESSEN HERSTELLUNG**
TUBE WITH REINFORCED INNER WALL AND METHOD FOR ITS MANUFACTURE
TUBE RENFORCÉ SUR LA PAROI INTÉRIEURE ET SON PROCÉDÉ DE FABRICATION

(30) Priorität: 10.09.2012 DE 102012018189
(43) Veröffentlichungstag der Anmeldung: 12.03.2014
(73) Patentinhaber: SCS Finance AG, 8834 Schindellegi (CH)
(72) Erfinder: Mayer, Christian, 8280 Kreuzlingen (CH)
(74) Vertreter: Kietzmann, Manfred

(56) Entgegenhaltungen:
- WO-A1-2011/101616
- WO-A1-2012/030240
- US-A1- 2004 069 498

## Beschreibung

Die Erfindung betrifft ein Rohr, in das in Abschnitten mit erhöhter Belastung Rohrelemente zur Verstärkung angeordnet sind.

Im Maschinenbau stellt sich häufig das Problem der Auslegung eines Teils auf mögliche Maximalbelastungen. Solche Belastungen treten aber meist nur lokal auf, so dass die Auslegung des gesamten Bauteils in der Materialstärke auf eine lokal mögliche Spannungsspitze unnötig viel Material verbraucht. Es werden daher insbesondere im Leichtbau lokale Verstärkungen bevorzugt.

Die GB 435 700 A offenbart das Verbinden zweier rohrförmiger Teile durch Ineinanderschieben, wobei ein oder beide Teile über die elastische Grenze gedehnt werden. Beim Zusammenfügen der einzelnen Teile wird bereits eine leichte permanente Änderung der Form erreicht, sodass das Erreichen der elastischen Grenze angezeigt wird. Dieses Verfahren zum Verbinden von rohrförmigen Teilen eignet sich nicht zum Verstärken bestimmter Abschnitte eines Rohres, da der einzuschiebende Rohrabschnitt beim Einschieben das gesamte Rohr aufweiten müßte.

Aus der AT 174521 B sind ein Verfahren und eine Vorrichtung zur Verbindung rohrförmiger Stücke bekannt. Hierbei werden die zu verbindenden Elemente teilweise in ineinander gesteckt und beide durch ein geeignetes Mittel einem inneren Druck ausgesetzt. Ein solches Verfahren ist kompliziert und kostenintensiv.

Die US 4,645,247 A zeigt eine mechanische Rohrverbindung, bei der die Rohrenden zunächst vorgedehnt werden und darauf folgend durch weitere Dehnung beide plastisch verformt werden.
Aus der US 3,476,413 A ist ein Verfahren zum Verbinden von Rohren bekannt, bei dem ein äußeres Rohr mit hydraulischem Druck auf ein inneres Rohr aufgepresst wird, wobei beide Teile nicht ganz bis zur Streckgrenze verformt werden. Da nur elastische Verformung auftritt, müssen die einzelnen Teile der Verbindung ineinander eingepresst werden, so dass einerseits keine Verstärkung innerhalb des Rohres möglich ist und andererseits eine mechanische Beschädigung der Rohrenden möglich ist.

Aus der US 2004/0069498 A1 ist weiter ein Verfahren zur Herstellung einer Rohrverbindung von zwei Rohren bekannt, bei dem das Ende eines ersten Rohres in das eines zweiten gesteckt wird, wobei mindestens das erste Rohr auf der Oberfläche ein Gebilde aufweist, das mit einem solchen im zweiten Rohr korrespondiert und diese durch eine plastische Verformung mindestens eines Rohres in einen ineinandergreifenden Zustand gebracht werden. Weiter werden ausgewählte Werkstoffeigenschaften bei der Dehnung oder Kompression genutzt, uns eine dichte Verbindung durch eine elastische Rückbewegung der Rohre zu erzielen.

Die WO 2012/030240 A1 beschreibt ein Verfahren zur Verbindung von zwei Rohren. Unter der Kraftwirkung von Rollen wird ein Rohr in der Wandstärke verjüngt und das so gewonnene Material auf das andere Rohr geschoben und angewalzt.

Aus der WO 2011/101616 A1 ist ein innenwandig verstärktes Rohr bekannt, in das in Abschnitten, die gegenüber dem Restrohr erhöhten Belastungen ausgesetzt sind, Rohrelemente kraftschlüssig auf die Innenwand des zu verstärkenden Rohres einwirkend angeordnet sind, wobei mindestens Teile des zu verstärkenden Rohres einen verringerten Außendurchmesser infolge einer plastischen Verformung aufweisen.

Es ist daher Aufgabe der vorliegenden Erfindung, die Nachteile des Standes der Technik zu vermeiden, und ein innenwandig und in Abschnitten erhöhter Belastung verstärktes Rohr mit optimiertem Kraftfluss vorzuschlagen. Auf diese Weise sollen kostengünstig Leichtbaurohre herstellbar sein, die Belastungsspitzen aufnehmen können.

Gelöst wird diese Aufgabe mit dem Rohr gemäß Anspruch 1. Bevorzugte Verwendungen benennt Anspruch 5. Vorteilhafte Ausgestaltungen sind Gegenstand der Unteransprüche.

Erfindungsgemäß wird ein innenwandig verstärktes Rohr vorgeschlagen, in das in Abschnitten, die gegenüber dem Restrohr erhöhten Belastungen ausgesetzt sind, Rohrelemente kraftschlüssig auf die Innenwand des Rohres einwirkend angeordnet sind, wobei mindestens Teile des Abschnittes des Rohres, die gegenüber dem Restrohr erhöhten Belastungen ausgesetzt sind, einen verringerten Außendurchmesser infolge einer plastische Verformung aufweisen und das zur Verstärkung angeordnete Rohrelement eine Fließgrenze besitzt, die größer ist als die des äußeren Rohres und wobei innenwandig der Übergang vom verstärkten Rohr zum an diesem anliegenden verstärkenden Rohrelement beim verstärkten Rohr eine konische Form aufweist und der konische Übergang hinter dem Ende des zur Verstärkung angeordneten Rohrelementes endet, so dass das Ende diesen Rohrelementes frei in das zu verstärkende Rohr hineinragt.

Ein Rohr im Sinne der Erfindung ist im Querschnitt kreisförmig, im Wesentlichen rund oder oval oder vieleckig ausgebildet. Im Falle eines nicht-kreisförmigen Rohrquerschnittes bezieht sich der Durchmesser auf die größtmögliche Diagonale durch ein nicht-kreisförmiges Rohr.

Fließgrenze ist dabei diejenige Spannung, ab der eine plastische (bleibende) Verformung einsetzt. Je nach eingesetztem Umformungsverfahren kann es sich dabei um eine Streckgrenze bei einer Zugbeanspruchung, um eine Quetschgrenze bei einer Druckbeanspruchung, um eine Biegegrenze bei Biegung und/oder um eine Torsionsgrenze bei einer Verdrehung handeln.
Für den Wert der Streckgrenze wird bevorzugt die obere Streckgrenze ReH verwendet. Alternativ ist es ebenfalls möglich die Dehngrenze Rp0.2 anzuwenden.

Für einen optimalen Kraftfluss in Rohrlängsrichtung ist gesorgt dadurch, dass Innenwandig der Übergang vom äußeren Rohr zum an diesem anliegenden Rohrelement beim äußeren Rohr eine konische Form aufweist, d.h. das äußere Rohr verjüngt sich in seinem Innendurchmesser, wobei der konische Übergang hinter dem Ende des Rohrelementes endet, so dass das Ende des Rohrelementes frei in das äußere Rohr hineinragt.

In Abhänigkeit von der Toleranz zwischen dem Innendurchmesser des äußeren zu verstärkenden Rohres und dem Außendurchmesser des Rohrelementes kann es ausreichen, dass das zur Verstärkung angeordnete Rohrelement nur elastisch verformt wird. Bei größeren Toleranzen ist auch dessen plastische Verformung vorzusehen, um Kraftschluss zwischen dem Rohr und dem Rohrelement zu erzielen.

Bei einer bevorzugten Ausführung weisen die Fließgrenzen des innenangeordneten Rohrelementes und die des äußeren Rohres mindestens 50 N/mm² Differenz, bevorzugt mindestens 100 N/mm² Differenz und insbesondere bevorzugt mindestens 200 N/mm² Differenz auf.

Als vorteilhaft hat sich gezeigt, wenn die Wanddicke des innenangeordneten Rohrelementes kleiner ist als die Wanddicke des äußeren Rohres. Bewährt haben sich Wanddicken der Rohrelemente von maximal 10% des Durchmessers des Rohres, bevorzugt maximal 5% des Durchmessers des Rohres und insbesondere bevorzugt maximal 3% des Durchmessers des Rohres.

Zur Herstellung eines innenwandig verstärkten Rohres, wird das oder die Rohrelemente, deren Außendurchmesser kleiner als der Innendurchmesser des Rohres ist und deren Fließgrenze größer ist als die des äußeren Rohres, in das äußere Rohr eingeschoben, bis sie den vorgesehenen zu verstärkenden Abschnitt erreichen, und mindesten Teile des Abschnittes des Rohres erfahren eine plastische Umformung, die so bemessen ist, dass das Rohrelement oder Teile davon mindestens elastisch verformt werden.

Bevorzugt wird der gesamte Abschnitt, in dem sich das Rohrelement befindet, plastisch verformt.
Bei der plastischen Verformung des zu verstärkenden Abschnittes des äußeren Rohres wird dessen Außen- und Innendurchmesser verkleinert.

Bevorzugt erfolgt das Umformen durch Axialpressen und/oder radialen Druck und/oder Rundkneten des äußeren Rohres, ohne dass diese Umformverfahren einschränkend sein sollen.

Verwendungen eines derart verstärkten Rohres sind beispielhaft Stossdämpferbehälterrohre oder Antriebswellen oder Lenkspindeln.

Die Erfindung wird nachfolgend in Ausführungsbeispielen anhand von Figuren näher erläutert. Hierbei zeigen:
- Fig. 1: einen Schnitt durch ein Rohr mit einer Verstärkung,
- Fig. 2: die Verstärkung an einer Verbindungsstelle,
- Fig. 3: eine Vergrößerung der Verstärkung aus Figur 2,
- Fig. 4: zwei Verstärkungen und
- Fig. 5: eine Vergrößerung einer Verstärkung aus Figur 4.

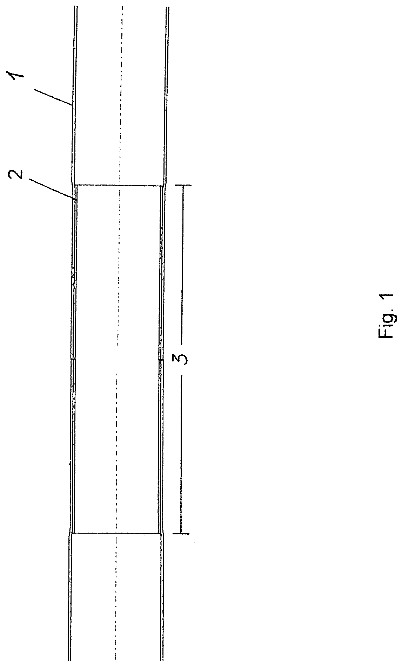

**Fig. 1** zeigt einen Schnitt durch ein verstärktes Rohr 1 mit einem innenliegenden Rohrelement 2. Das äußere Rohr 1 weist eine kleinere Streckgrenze auf als das innenliegende Rohrelement 2. Das äußere Rohr 1 wurde in dem Abschnitt 3, der durch das innenliegende Rohrelement 2 verstärkt wird, plastisch verformt. Rohr 1 und Rohrelement 2 sind aus Stahl mit unterschiedlichen Streckgrenzen ReH hergestellt. Die Verstärkung ist im Abschnitt 3 des Rohres 1 angeordnet, bei dem bei bestimmungsgemäßer Benutzung eine Belastungsspitze auftritt. Die Wanddicke des innenliegenden Rohrelements 2 ist kleiner als die Wanddicke des äußeren Rohres 1. Die Rohre haben einen kreisförmigen Querschnitt. Das äußere Rohr 1 hat vor dem Verbinden einen Außendurchmesser von 50,5 mm und wird durch die plastische Verformung auf einen Durchmesser von 50 mm umgeformt. Das innen liegende Rohrelement 2 hat vor dem Verbinden einen Außendurchmesser von 47.4 mm und wird durch elastische und plastische Verformung auf einen Durchmesser von 47 mm umgeformt.

Eine beispielhafte Berechnung der Verformung in Abhängigkeit von den Materialkennwerten ist in der Tabelle beispielhaft dargestellt. Als Rohr 1 wird das äußere Rohr 1 bezeichnet und als Rohr 2 das zur Verstärkung eingefügte Rohrelement 2.

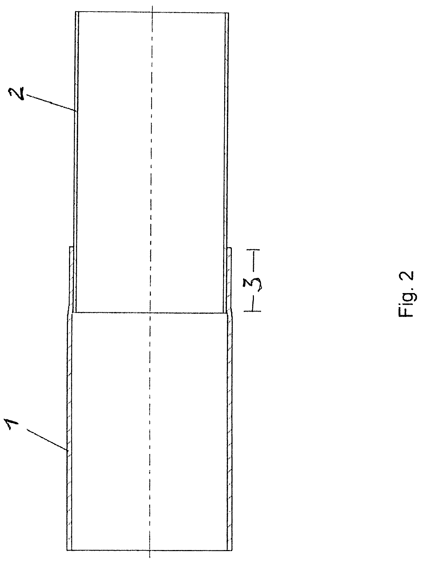

**Fig. 2** zeigt eine alternative Ausführungsform des Rohres 1, wobei das innenliegende Rohrelement 2 nur teilweise von dem äußeren Rohr 1 umgeben ist. Bei dieser Ausführungsform erfolgt die Verstärkung in einem Verstärkungsabschnitt 3. Die Wanddicke des innenliegenden Rohrelements 2 ist kleiner als die Wanddicke des äußeren Rohres 1.

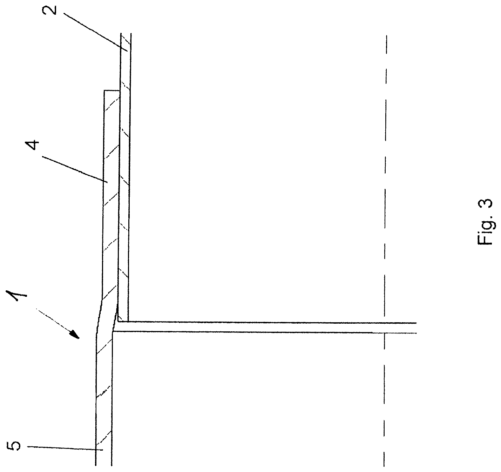

**Fig. 3** zeigt eine Vergrößerung der verstärkten Stelle des Rohres 1 hier aus Fig. 2. Um Spannungsspitzen zu vermeiden, ist das innenliegende Rohrelement 2 über die Kontaktstelle mit dem äußeren Rohr 1 hinaus in das äußere Rohr 1 eingeschoben.

Zwischen dem plastisch verformten Bereich 4 des äußeren Rohres 1 und dem nicht verformten Bereich 5 des äußeren Rohres 1 ist ein Konus ausgebildet. Die konusförmige Ausbildung führt zu einer Verbesserung des Kraftflusses.

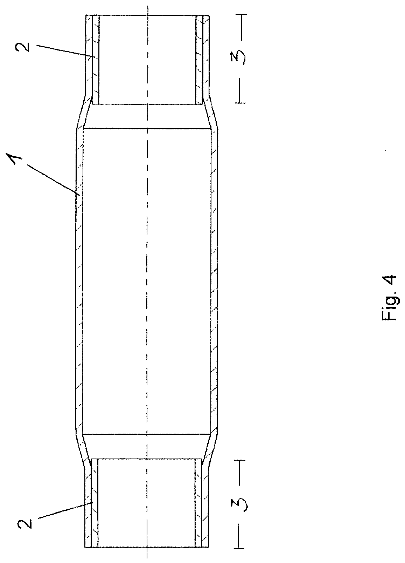

**Fig. 4** zeigt einen Schnitt durch ein Stossdämpferbehälterrohr mit zwei verstärkten Abschnitten 3. Das Rohr 1 weist zwei innenliegende Rohrelemente 2 auf.
Die Verstärkungen durch die innenliegenden Rohrelemente 2 sind in Abschnitten 3 des Rohres 1 angebracht, an denen bei bestimmungsgemäßer Benutzung Belastungsspitzen auftreten, hier an beiden Außenbereichen.

Das äußere Rohr 1 ist in diesen Bereichen, in denen die innenliegenden Rohrelemente 2 positioniert sind, plastisch verformt. Die innenliegenden Rohrelemente 2 sind durch die plastische Verformung des äußeren Rohres 1 zumindest elastisch verformt.

Die Wanddicken der innenliegenden Rohrelemente 2 und des äußeren Rohres 1 entsprechen sich im Wesentlichen.
Das Rohr 1 und die beiden Rohrelemente 2 sind aus Stahl mit unterschiedlichen Streckgrenzen gefertigt.

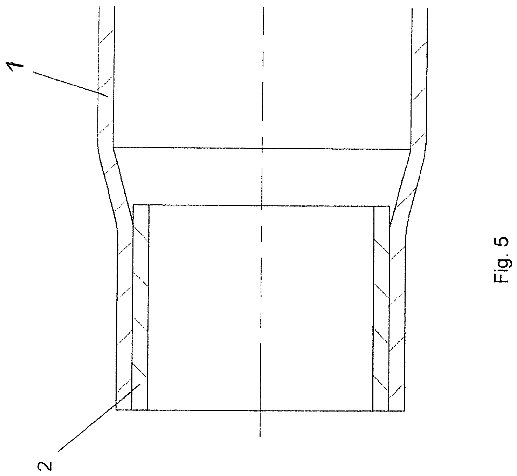

**Fig. 5** zeigt eine Vergrößerung einer Verstärkung des Stossdämpferbehälterrohres aus Fig. 4. Das äußere Rohr 1 weist zwischen dem plastisch verformten und dem nicht verformten Bereich eine Konus auf. Ein derartiger Konus optimiert den Kraftfluss. Das innenliegende Rohrelement 2 ist so in das äußere Rohr 1 eingesteckt, dass es über den Bereich der plastischen Verformung des außenliegenden Rohres 1 hinausgeht. Auch dies verbessert den Kraftfluss und verhindert eine Kerbwirkung.

## Patentansprüche

1. Innenwandig verstärktes Rohr (1), in das in Abschnitten (3), die gegenüber dem Restrohr erhöhten Belastungen ausgesetzt sind, Rohrelemente (2) kraftschlüssig auf die Innenwand des Rohres (1) einwirkend angeordnet sind, wobei mindestens Teile des Abschnittes (3) des Rohres (1) einen verringerten Außendurchmesser infolge einer plastischen Verformung aufweisen und das zur Verstärkung angeordnete Rohrelement (2) eine Fließgrenze besitzt, die größer ist als die des Rohres (1), wobei innenwandig der Übergang vom Rohr (1) zum an diesem anliegenden Rohrelement (2) beim Rohr (1) eine konische Form aufweist und der konische Übergang hinter dem Ende des Rohrelementes (2) endet, so dass das Ende des Rohrelementes (2) frei in das Rohr (1) hineinragt.

2. Innenwandig verstärktes Rohr (1) nach Anspruch 1, **dadurch gekennzeichnet, dass**
das Rohr (1) im Abschnitt (3) oder Teilen des Abschnittes (3) plastisch verformt ist und das zur Verstärkung angeordnete Rohrelement (2) mindestens elastisch verformt ist, vorzugsweise auch plastisch.

3. Innenwandig verstärktes Rohr (1) nach Anspruch 1 oder 2, **dadurch gekennzeichnet, dass**
die Fließgrenze des innenangeordneten Rohrelementes (2) und des äußeren Rohres (1) mindestens 50 N/mm² Differenz, bevorzugt mindestens 100 N/mm² Differenz und insbesondere bevorzugt mindestens 200 N/mm² Differenz aufweisen.

4. Innenwandig verstärktes Rohr (1) nach einem der Ansprüche 1 bis 3, **dadurch gekennzeichnet, dass**
die Wanddicke des innenangeordneten Rohrelementes (2) kleiner ist als die Wanddicke des Rohres (1).

5. Verwendung eines Rohres (1) nach einem der Ansprüchen 1 bis 4 als Stossdämpferbehälterrohr oder als Antriebswelle oder als Lenkspindel.

## Claims

1. A pipe (1) with a reinforced inner wall, into which in sections (3), which are exposed to increased stress compared to the remaining pipe, pipe elements (2) are arranged in a force-fit manner such that they impact the inner wall of the pipe (1), wherein at least parts of the section (3) of the pipe (1) feature a reduced outer diameter resulting from a plastic deformation and the pipe element (2) arranged as reinforcement has a flow limit which is greater than that of the pipe (1), wherein on the inner wall, the transfer from the pipe (1) to the pipe element (2) that is in contact with it features a conical form in the area of the pipe (1), and the conical transfer finishes behind the end of the pipe element (2), so that the end of the pipe element(2) protrudes freely into the pipe (1).

2. The pipe (1) with a reinforced inner wall according to claim 1, **characterized in that**
the pipe (1) is plastically deformed in the section (3) or parts of the section (3) and the pipe element (2) arranged to as reinforcement is at least elastically deformed, preferably also plastically deformed.

3. The pipe (1) with a reinforced inner wall according to claims 1 or 2, **characterized in that**
the flow limit of the pipe element (2) arranged in the interior and of the outer pipe (1) features at least 50 N/mm² difference, preferably at least 100 N/mm² difference, and particularly preferably at least 200 N/mm² difference.

4. The pipe (1) with a reinforced inner wall according to any one of claims 1 to 3, **characterized in that** the wall thickness of the pipe element (2) arranged in the interior is less than the wall thickness of the pipe (1).

5. The use of a pipe (1) according to any one of claims 1 to 4 as a shock absorber container pipe, or as a drive shaft, or as a steering shaft.

## Revendications

1. Tube (1) renforcé sur la paroi intérieure, dans lequel des éléments tubulaires (2) sont disposés en agissant par liaison de force sur la paroi intérieure du tube (1) dans des tronçons (3) qui sont exposés à des contraintes accrues par rapport au reste du tube, au moins des parties du tronçon (3) du tube (1) présentant un diamètre extérieur réduit du fait d'une déformation plastique, et l'élément tubulaire (2) disposé pour le renforcement possédant une limite d'élasticité qui est supérieure à celle du tube (1), la transition à partir du tube (1) vers l'élément tubulaire (2) adjacent au tube présentant sur la paroi intérieure au niveau du tube (1) une forme conique, et la transition conique derrière l'extrémité de l'élément tubulaire (2) se terminant de telle sorte que l'extrémité de l'élément tubulaire (2) dépasse librement dans le tube (1).

2. Tube (1) renforcé sur la paroi intérieure selon la revendication 1, **caractérisé en ce que**
le tube (1) est déformé plastiquement dans le tronçon (3) ou dans des parties du tronçon (3), et l'élément tubulaire (2) disposé pour le renforcement est déformé au moins élastiquement, de préférence également plastiquement.

3. Tube (1) renforcé sur la paroi intérieure selon la revendication 1 ou 2, **caractérisé en ce que**
la limite d'élasticité de l'élément tubulaire (2) disposé intérieurement et celle du tube (1) extérieur présentent une différence d'au moins 50 N/mm², de préférence d'au moins 100 N/mm², de façon particulièrement préférée d'au moins 200 N/mm².

4. Tube (1) renforcé sur la paroi intérieure selon l'une quelconque des revendications 1 à 3, **caractérisé en ce que** l'épaisseur de paroi de l'élément tubulaire (2) disposé intérieurement est plus faible que l'épaisseur de paroi du tube (1).

5. Utilisation d'un tube (1) selon l'une quelconque des revendications 1 à 4 en tant que tube de logement d'amortisseur ou en tant qu'arbre d'entraînement ou en tant qu'arbre de direction.
